# EUROPÄISCHE PATENTANMELDUNG

(11) **EP 1 387 539 A1**
(43) Veröffentlichungstag der Anmeldung: **04.02.2004**
(21) Anmeldenummer: 02017412.4
(22) Anmeldetag: 02.08.2002
(51) Int. Cl.: H04L 12/58, H04Q 7/22

(54) **Verfahren und System zum Blockieren von unerwünschten Nachrichten**

(71) Anmelder: SIEMENS AKTIENGESELLSCHAFT, 80333 München (DE)
(72) Erfinder: Schmidt, Andreas, 38114 Braunschweig (DE); Trauberg, Markus, 38159 Velchede (DE); Van Niekerk, Sabine, 38228 Salzgitter (DE)

(57) **Zusammenfassung**

Die vorliegende Erfindung betrifft ein Verfahren zum blockieren von unerwünschten Nachrichten (MMs), aufweisend die Verfahrensschritte
- Übertragen einer Nachricht von einem Absender (MMS UA A) an einen Sender (MMS R/S A),
- Übertragen einer Nachricht von einem Sender (MMS R/S A) an einen Dienstleistungsanbieter (MMSE SP B),
- Übertragen der Nachricht von dem Dienstleistungsanbieter (MMSE SP B) an einen Empfänger (MMS UA B), wobei der Empfänger von dem Dienstleistungsanbieter bedient wird.

Die Übertragung der Nachricht von dem Dienstleistungsanbieter an den Empfänger erfolgt nur dann, falls der Absender nicht in einer Ausschlussliste steht. Bevorzugt wird die Ausschlussliste beim Dienstleistungsanbieter verwaltet.

## Beschreibung

Die vorliegende Erfindung betrifft ein Verfahren und ein System zum Blockieren von unerwünschten Nachrichten.

Derartige Verfahren bzw. Systeme können unter Anderem in Mobilfunksystemen, wie beispielsweise dem GSM- (Global System for Mobile Communications) System Anwendung finden.

Das Mobilfunksystem GSM bietet neben der Sprachtelephonie auch die Möglichkeit, kurze Textnachrichten von bis zu 160 Zeichen Länge zu versenden bzw, zu empfangen. Dieser Dienst wird als SMS (Short Message Service) bezeichnet und ist in der technischen Spezifikation TS 23.040 Version 5.4.0, Release 5,"Technical Specification Group Terminals; Technical Realisation of the Short Message Service (SMS)" des 3^{rd} Generation Partnership Projects (3GPP) erläutert.

Für Mobilfunksysteme der nächsten Generation (2.5G und 3G) wie beispielsweise UMTS (Universal Mobile Telecommunication Systems), wird zur Zeit eine multimediafähige Variante eines mobilen Nachrichtendienstes standardisiert, der sogenannte MMS (Multimedia Messaging Service)-Dienst. Dieser MMS-Dienst ist in den technischen Spezifikationen TS 22.140 Version 5.2.0, Release 5, "Technical Specification Group Services and Systems Aspects; Service Aspects; Stage 1; Multimedia Messaging Service (MMS)" und TS 23.140 Version 5.3.0, Release 5, "Group Terminals; Multimedia Messaging Service (MMS), Functional Description; Stage 2" des 3^{rd} Generation Partnership Projects (3GPP) spezifiziert. Nachrichten mit multimedialen Inhalten werden im Folgenden zur besseren Abgrenzung von den Textnachrichten des SMS als MMs bezeichnet. Im Gegensatz zu SMS entfällt im MMS die Beschränkung auf reine Textinhalte. Bei MMS wird es möglich sein, Texte dem individuellen Geschmack entsprechend zu formatieren, sowie Audio- und Videoinhalte in eine Nachricht einzubetten. Eine MM kann demnach aus mehreren MM-Elementen von unterschiedlichen Dateitypen (z.B. Audio oder Standbild) oder Dateiformaten (bei Standbild zum Beispiel das sogenannte "Graphics Interchange Format" GIF oder "Joint photographic expert group" JPEG) bestehen.

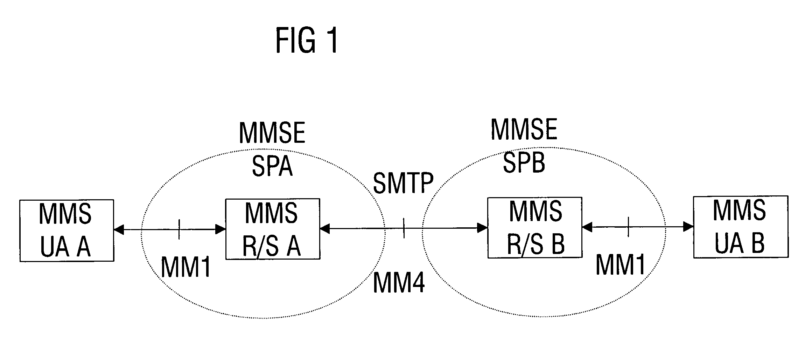

Figur 1 zeigt eine bekannte MMS-Netzwerkarchitektur. Als MMS UA wird nachfolgend immer ein sogenannter "MMS-User Agent" bezeichnet. Bei dem MMS UA kann es sich um ein Software-Programm, beispielsweise auf einem Mobilfunkgerät oder auf einem an ein Mobilfunkgerät angeschlossenen Gerät wie Laptop oder Ähnlichem, handeln, welches MMS realisiert. In Figur 1 wird zwischen einem Nutzer A und einem Nutzer B unterschieden. Entsprechend gibt es einen MMS UA A und einen MMS UA B. Bei den anderen Netzwerkelementen wird nachfolgend entsprechend durch anhängen der Buchstaben "A" und "B" zwischen Elementen A und B unterschieden. Figur 1 zeigt des Weiteren zwei Netzwerkelemente MMS R/S A bzw. MMS R/S B, welche sogenannte "MMS Relay/Server" darstellen. Bei den MMS R/S A bzw. MMS R/S B handelt es sich um Netzwerkelemente, die im Zuständigkeitsbereich MMSE (Multimedia Messaging Service Environment) der MMS-Dienstleister SP (Service Provider) den jeweiligen MMS UA die MMS-Funktionalität zur Verfügung stellen. Entsprechend zeigt Figur 1 einen MMSE SPA bzw. einen MMSE SPB.

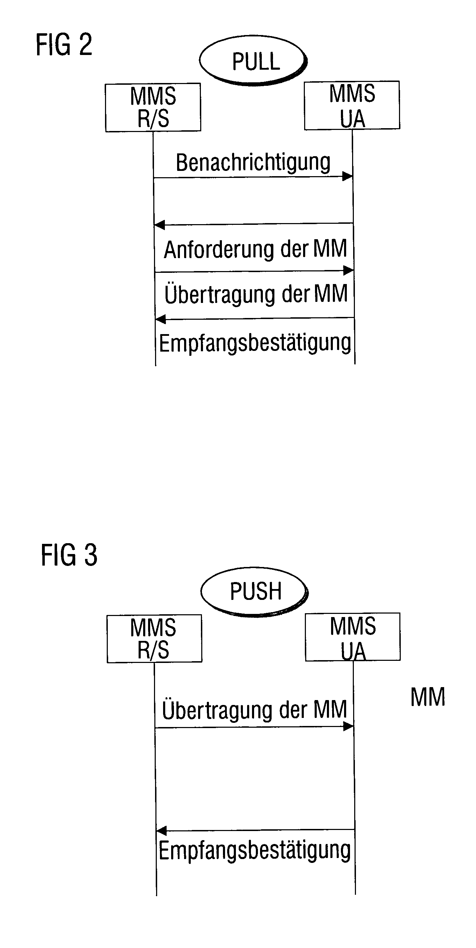

Ein charakteristisches Merkmal von MMS ist, dass bei der Zustellung von MMs zwischen dem sogenannten "Push-Modus", bei dem eine ankommende MM unverzüglich dem Empfänger zugestellt wird, und dem sogenannten "Pull-Modus", bei dem der Empfänger zunächst über eine neu eingetroffene MM informiert wird und daraufhin selbst entscheiden kann, ob bzw. wann er diese MM auf sein Endgerät herunterlädt, unterschieden wird. Die Figuren 2 und 3 zeigen den Unterschied zwischen Pull- und Push-Modus bei der Zustellung einer MM. Beim Pull-Modus gemäß Figur 2 geht zuerst eine Benachrichtigung vom MMS R/S an den MMS UA, dass eine Nachricht vorliegt, wohingegen beim Push-Modus gemäß Figur 3 die Nachricht sofort übertragen wird.

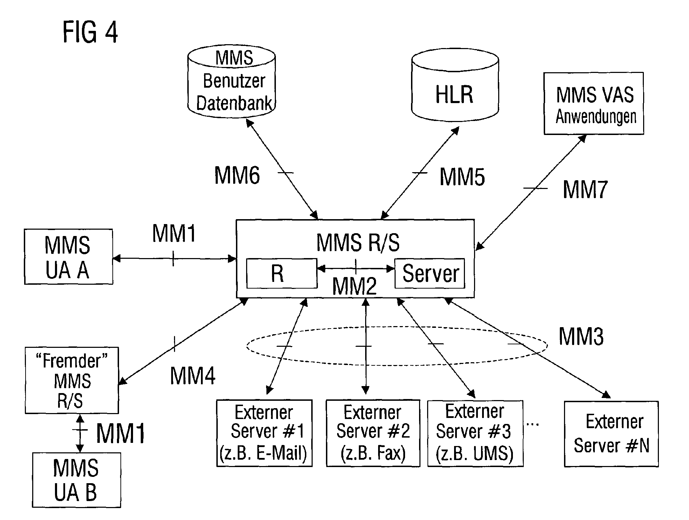

Figur 4 zeigt eine bekannte Netzwerkarchitektur mit definierten Schnittstellen zum Anschluss weiterer Netzwerk-Elemente an einen MMS R/S. Neben der Schnittstelle MM1, über welche die MMS UA und MMS R/S miteinander verbunden werden, können über die Schnittstelle MM3 beliebige externe Rechner, d.h. Server, wie beispielsweise E-Mail-Server, Fax-Server etc. an einen MMS R/S angeschlossen werden. Die Anbindung fremder MMS-Dienstleister wird mit der Schnittstelle MM4 realisiert. Die Schnittstelle MM5 verbindet den MMS R/S mit dem Heim-Orts-Register HLR (Home Location Register) des Netzbetreibers, in welchem die individuellen Teilnehmerdaten eines jeden Kunden gespeichert sind. Das HRL befindet sich dabei im Zuständigkeitsbereich des Netzbetreibers. Den Anschluss einer oder mehrerer MMS-Benutzer-Datenbanken ermöglicht die Schnittstelle MM6. Über die Schnittstelle MM7 wird der Anschluss weiterer Rechner ermöglicht, die von einem Mehrwertdienst-Anbieter Mehrwertdienste den MMS-Nutzern zur Verfügung stellen.

Der MMS lässt sich optional individualisieren. Auf Basis individueller Benutzer-Einstellungen kann ein MMS R/S bestimmten MMs eine besondere Behandlung zukommen lassen. So können beispielsweise MMs die einer bestimmen MM-Kategorie angehören, z.B. persönliche MMs, vom MMS R/S umgehend, das heißt ohne eine Benachrichtigung des MM UA, an eine vorher vom Benutzer angegebene E-Mail-Adresse weitergeleitet werden. Des Weiteren können auch MMs, die bestimmte Stichwörter im Titel tragen, vom MMS R/S automatisch gelöscht werden, oder MMs, die von einem bestimmten Absender kommen, umgehend, d.h. im Push-Modus, an den MMS UA zugestellt werden, während der übliche gewünschte Zustell-Mechanismus für alle anderen MMs der Pull-Modus ist. Darüber hinaus sind weitere individuelle Regeln denkbar.

Alle Regeln haben jedoch den Nachteil, dass sie der MMS-Nutzer bereits vor dem Eintreffen der MMs im MMSE seines MMS-Dienstleisters definiert haben muss. Dies kann entweder bei Vertragsabschluss oder während der Vertragslaufzeit beispielsweise telefonisch oder auch mittels (mobilem) "web browsing" erfolgen. Die individuellen Regeln zum Personalisieren des MMS werden üblicherweise in der MMS-Benutzerdatenbank verwaltet, auf die der MMS R/S über die Schnittstelle MM6 zugreifen kann.

Im MMS besitzt ein Absender auch die Möglichkeit, seine MMs anonym zu verschicken. Vergleiche mit anderen Diensten, bei denen der Absender vor dem Empfänger anonym bleiben kann, wie beispielsweise die klassische Briefpost, zeigen jedoch, dass es vereinzelt zu Missbrauch in Form von unerwünschter Werbung, Beleidigungen und dergleichen kommen kann. Auch beim MMS kann Missbrauch mit anonymen MMs nicht ausgeschlossen werden.

Der Empfänger kann zwar auf seinem MMS UA einen Filter einrichten, um die MMs, die ihn von unerwünschten Absendern erreichen, auszusortieren. Dies hat allerdings den Nachteil, dass die Filterfunktionalität erst nach der Übertragung der MM bzw. der Benachrichtigung über die kostbare Luftschnittstelle erfolgt. Dem Empfänger sind je nach Abrechnungsmodell mit seinem Dienstleister die unerwünscht übertragenen Daten zu diesem Zeitpunkt bereits in Rechnung gestellt worden. Des Weiteren besteht der Nachteil, dass bei anonym verschickten MMs das Filterkriterium fehlt. Es ist nicht bekannt, wonach gefiltert werden soll, wenn beispielsweise dem MMS UA die Identität des Absenders nicht bekannt ist bzw. wenn der angegebene Alias-Name nur temporär, d.h. nur für eine einzelne MM, dem tatsächlichen Absender zugeordnet werden kann.

Somit liegt der vorliegenden Erfindung die Aufgabe zugrunde, ein Verfahren und ein System zum Blockieren von unerwünschten Nachrichten bereitzustellen, welches effizient unerwünschte Nachrichten abweist, und dabei die Anzahl der über die kostbare Luftschnittstelle zu übertragenden Nachrichten minimal hält.

Diese Aufgabe wird erfindungsgemäß durch ein Verfahren zum Blockieren von unerwünschten Nachrichten mit den Merkmalen des Anspruchs 1 und ein System zum Blockieren von unerwünschten Nachrichten mit den Merkmalen des Anspruchs 14 gelöst. Des Weiteren stellt ein Endgerät mit den Merkmalen des Anspruchs 27 und eine Sende-/Empfangsvorrichtung mit den Merkmalen des Anspruchs 28 eine Lösung der Aufgabe dar. Die Unteransprüche definieren jeweils bevorzugte und vorteilhafte Ausführungsformen der vorliegenden Erfindung.

Das erfindungsgemäße Verfahren zum Blockieren von unerwünschten Nachrichten weist die Verfahrensschritte
- Übertragen einer Nachricht von einem Absender an einen Sender,
- Übertragen der Nachricht von einem Sender an einen Dienstleistungsanbieter, und
- Übertragen der Nachricht von dem Dienstleistungsanbieter an einen Empfänger, wobei der Empfänger von dem Dienstleistungsanbieter bedient wird,
auf. Die Übertragung der Nachricht von dem Dienstleistungsanbieter an den Empfänger erfolgt nur dann, falls der Absender nicht in einer Ausschlussliste steht. Bei dem Absender kann es sich beispielsweise um einen MMS UA handeln und bei dem Sender um einen MMS R/S. Der Empfänger ist bevorzugt bei dem Dienstleistungsanbieter angemeldet, d.h. er steht bei ihm unter Vertrag. Durch dieses Verfahren werden zukünftig nur Nachrichten von Absendern, die nicht in einer Ausschlussliste stehen, über die Luftschnittstelle zu dem Empfänger übertragen.

Bevorzugt wird die Ausschlussliste beim Dienstleistungsanbieter verwaltet. Dies hat den Vorteil, dass dem Dienstleistungsanbieter stets bekannt ist, welche Absender von Übertragungen an bestimmte Empfänger bzw. Gruppen von Empfängern ausgeschlossen sind. In einer bevorzugten Ausführungsform der vorliegenden Erfindung ist die Ausschlussliste eine persönliche, d.h. individuell zusammengestellte, Ausschlussliste des Empfängers. Der Dienstleistungsanbieter verwaltet in diesem Fall für jeden Empfänger eine persönliche Ausschlussliste, welche vor Übertragung einer eingehenden Nachricht an den Empfänger über die Luftschnittstelle konsultiert wird.

In einer weiteren Ausführungsform der vorliegenden Erfindung ist die Ausschlussliste eine allgemeine Ausschlussliste, welche für alle Empfänger und/oder Gruppen von Empfängern berücksichtigt wird. Es ist denkbar, dass eine allgemeine Ausschlussliste beim Dienstleistungsanbieter verwaltet wird. In diese Ausschlussliste werden Absender eingetragen, deren Nachrichten grundsätzlich nicht an irgendwelche Empfänger und/oder Gruppen von Empfängern über die Luftschnittstelle gesendet werden sollen. Dabei kann der Dienstleistungsanbieter nach eigenen Kriterien bestimmen, welche Personen bzw. Empfänger Absender auf eine entsprechende allgemeine Ausschlussliste setzen können bzw. wie sich die Gruppen von Empfängern aufteilen. Auch eine Kombination von persönlichen mit allgemeinen Ausschlusslisten ist möglich.

In einer Weiterbildung der Erfindung teilt der Empfänger dem Dienstleistungsanbieter mit, wenn er einen Absender auf die Ausschlussliste setzen lassen will. Es ist denkbar, dass der Empfänger seine Ausschlussliste selbst zusammenstellt. Dazu benachrichtigt der Empfänger den Dienstleistungsanbieter, welchen Absender er auf die Ausschlussliste setzen lassen will. Alternativ ist aber auch denkbar, dass nur der Dienstleistungsanbieter selbst Absender auf eine Ausschlussliste setzen lassen kann.

In einer Weiterbildung der vorliegenden Erfindung empfängt der Empfänger die Nachricht anonym und teilt dem Dienstleistungsanbieter mit, wenn er den Absender der Nachricht auf die Ausschlussliste setzen lassen will. In einem solchen Fall ist dem Empfänger der Absender nicht bekannt. Falls der Empfänger dennoch keine Nachrichten mehr von diesem Absender empfangen will, beispielsweise weil es sich um Werbe-Nachrichten handelt, so kann der Empfänger dies dem Dienstleistungsanbieter mitteilen. Dem Dienstleistungsanbieter ist der Name des Absenders bekannt. Er leitet diesen Namen jedoch nur nicht an den Empfänger weiter. Somit ist es dem Dienstleistungsanbieter möglich, den Namen des Absenders auf die Ausschlussliste zu setzen.

In einer Weiterbildung der vorliegenden Erfindung empfängt der Empfänger die Nachricht mit einem Alias-Namen und teilt dem Dienstleistungsanbieter mit, wenn er den Absender der Nachricht auf die Ausschlussliste setzen lassen will. Ähnlich wie bei dem Empfang von Nachrichten mit einem anonymen Absender weiß der Empfänger bei Empfang einer Nachricht mit einem Alias-Namen nicht, wer der tatsächliche Absender ist. Will er dennoch von diesem Absender zukünftig keine Nachrichten mehr erhalten, so kann er dies wiederum dem Dienstleistungsanbieter mitteilen, dem der tatsächliche Absender bekannt ist. Folglich kann der Dienstleistungsanbieter diesen auf die Ausschlussliste setzen, so dass der Empfänger zukünftig keine Nachrichten mehr von diesem Absender empfängt. Dadurch wird wiederum die Luftschnittstelle zu dem Empfänger entlastet.

In einer bevorzugten Ausführungsform ist die Mitteilung an den Dienstleistungsanbieter als eigenständige Kurznachricht, d.h. als sogenannte "Abstract Message", ausgebildet. Weiter bevorzugt ist die Mitteilung an den Dienstleistungsanbieter in Form eines Informationselementes in der Abstract Message integriert.

In einer weiteren Ausführungsform ist die Mitteilung an den Dienstleistungsanbieter in einer MM, insbesondere in deren Nutzdaten, enthalten.

Die Mitteilung an den Dienstleistungsanbieter kann auch weitere Informationen für die Filter-Funktionalität, insbesondere Art der Ausschlussliste und/oder zeitliche Beschränkungen, enthalten.

In einer bevorzugten Ausführungsform beinhaltet die Mitteilung an den Dienstleistungsanbieter ein Identifikationssignal, aus dem der Dienstleistungsanbieter die Identität des Absenders bestimmen kann. Hat der Empfänger nur die anonyme Nachricht bzw. die Nachricht mit dem Alias-Namen empfangen, so stellt sich das Problem, wie der Empfänger dem Dienstleistungsanbieter mitteilen kann, welcher Absender auf die Ausschlussliste gesetzt werden soll. In einem solchen Fall sendet der Empfänger dem Dienstleistungsanbieter mit seiner Mitteilung ein Identifikationssignal, durch welches die Nachricht bzw. der Absender eindeutig identifiziert werden kann. Bevorzugt werden dabei eine Nachrichten-Kennung und/oder der Alias-Name als Identifikationssignal verwendet. Bei der Nachrichten-Kennung kann es sich um eine Referenz auf den Speicherplatz der Nachricht, dem sogenannten URI (Uniform Ressource Identifier), aus der Benachrichtigung, oder um eine Nachrichten-ID, die sogenannte Message-ID, aus der Zustellung der MM handeln.

Die eingangs gestellte Aufgabe wird auch durch ein System zum Blockieren von unerwünschten Nachrichten gelöst. Das System weist einen Sender, welcher geeignet ist, eine Nachricht von einem Absender zu übertragen, einen Dienstleistungsanbieter, welcher geeignet ist, die Nachricht von dem Sender zu empfangen und einen von dem Dienstleistungsanbieter bedienten Empfänger, wobei der Empfänger geeignet ist, die Nachricht von dem Dienstleistungsanbieter zu empfangen, auf. Der Dienstleistungsanbieter ist dabei geeignet, die Nachricht an den Empfänger nur dann zu übertragen, falls der Absender nicht in der Ausschlussliste steht.

Die vorliegende Erfindung betrifft des Weiteren ein Endgerät, insbesondere ein Mobilfunk-Endgerät, zur Verwendung bei einem erfindungsgemäßen Verfahren und/oder zur Verwendung in einem erfindungsgemäßen System. Des Weiteren betrifft die vorliegende Erfindung auch eine Sende-/Empfangsvorrichtung, insbesondere eine Mobilfunk-Basisstation, zur Verwendung bei einem erfindungsgemäßen Verfahren und/oder zur Verwendung in einem erfindungsgemäßen System.

Vorteilhaft bei der vorliegenden Erfindung ist, das eintreffende MMs bereits vor der Benachrichtigung bzw. vor der Zustellung daraufhin untersucht werden können, ob der Absender der MM auf einer privaten und/oder öffentlichen Ausschlussliste des Empfängers steht. Dadurch wird der Datenverkehr (insbesondere über die begrenzten Ressourcen der Luftschnittstelle) gesenkt, was zu niedrigeren Kosten führt.

Weiterhin vorteilhaft ist, dass selbst bei anonym verschickten MMs eine Filterfunktonalität greift, weil die Identität des Absenders dem MMS-Dienstleistungsanbieter im Gegensatz zum Empfänger bekannt ist.

Schließlich ist vorteilhaft, dass ein Empfänger seine Ausschlussliste nach Erhalt einer Benachrichtigung bzw. nach der Zustellung einer MM jederzeit um neue Einträge dynamisch erweitern kann.

Die Erfindung wird im Folgenden unter Hinweis auf die beigefügten Zeichnungen anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: eine MMS-Netzwerk-Architektur;
- Figur 2: eine schematische Darstellung des Pull-Modus;
- Figur 3: eine schematische Darstellung des Push-Modus;
- Figur 4: eine schematische Darstellung eines MMS R/S und seiner Schnittstellen;
- Figur 5: eine schematische Darstellung eines Versendens einer MM vom MMS UA A an den MMS UA B; und
- Figur 6: eine schematische Darstellung einer anonymen Versendung einer MM.

Die Figuren 1 bis 4 wurden bereits in der Einleitung der Beschreibung beschrieben, so dass an dieser Stelle auf eine erneute Erläuterung verzichtet wird.

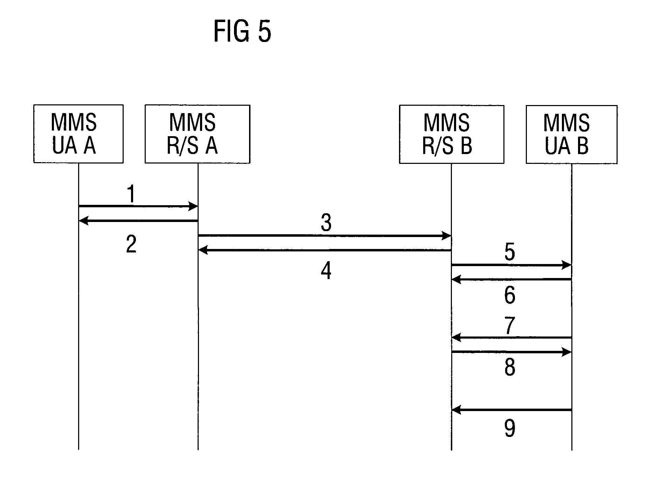

Figur 5 zeigt ein Ausführungsbeispiel eines Versendens einer MM von einem Nutzer MMS UA A zu einem Nutzer MMS UA B über die Netzwerkelemente MMS R/S A und MMS R/S B. Der Austausch von Daten zwischen den erwähnten Datenübertragungseinheiten soll in diesem Ausführungsbeispiel anhand der in der technischen Spezifikation TS 23.140 Version 5.3.0, Release 5, "Group Terminals; Multimedia Messaging Service (MMS); Functional Description; Stage 2" des 3^{rd} Generation Partnership Projects (3GPP) definierten sogenannten "Abstract Messages", d.h. Kurznachrichten, beschrieben werden. Eine Abstract Message besteht aus mindestens einem Informationselement. Im MMS kann der Absender, d.h. der Nutzer A, eine MM über die Luftschnittstelle MM1 an den MMS R/S A in der Umgebung MMSE seines Dienstleistungsanbieters A mit der Abstract Message 1 schicken. Der MMS R/S A bestätigt den korrekten Empfang der MM vom MMS UA A mit der Abstract Message 2.

Die Übertragung der MM an den MMS R/S B im Dienstleistungsgebiet B des Empfängers geschieht mit dem Abstract Message-Paar 3 (enthält die MM) und 4 (Rückmeldung). Danach wird der Empfänger, d.h. der Nutzer B, über die zum Herunterladen bereitliegende MM mit der Abstract Message 5 informiert. In dieser Benachrichtigung ist eine einheitliche Ressourcen-Kennung URI (Uniform Ressource Identifier) des Speicherplatzes der MM als Referenz enthalten. Die Abstract Message 6 dient vorrangig als Bestätigung für den korrekten Empfang der Benachrichtigung an den Nutzer MMS UA B und dazu, dem MMS-Dienstleister den vom Empfänger gewünschten Zustellmodus, d.h. Push- oder Pull-Modus, mitzuteilen. Mit der Abstract Message 7 kann der Empfänger, d.h. der Nutzer B, das Herunterladen einer auf dem MMS R/S B bereitliegenden MM initiieren. Das Zustellen der MM vom MMS R/S B an den MMS UA B erfolgt sodann mittels der Abstract Message 8. Neben der MM selbst ist auch ein Identifikationselement, d.h. die sogenannte Nachrichten-ID, Bestandteil dieser Abstract Message, mit deren Hilfe die MM später sowohl vom MMS R/S B als auch vom MMS UA B des Empfängers für weitere MMS-Funktionalitäten eindeutig referenziert werden kann. Der MMS R/S B kann mit der Abstract-Message 9 vom MMS UA B über den Ausgang des Herunterladens informiert werden.

Bei MMS hat ein Absender die Möglichkeit, seine MMs anonym zu verschicken. Diese Funktion ist beispielsweise dann von Vorteil, wenn mit MMS Meinungsumfragen durchgeführt oder Beratungsdienste wie beispielsweise Schuldenberatung, Anonyme Alkoholiker etc. in Anspruch genommen werden. Dazu muss beim Verschicken der MM in der Abstract Message 1 ein Informationselement entsprechend gesetzt werden.

Die Adresse des Absenders wird dabei nur vor dem Empfänger der MM geheim gehalten. Das heißt, eine Geheimhaltung erfolgt bei der Benachrichtigung über eine neu eingetroffene, zum Herunterladen bereitliegende MM in der Abstract Message 5 und beim Herunterladen der MM in der Abstract Message 8. Dabei haben die Beteiligten MMS-Dienstleister weiterhin uneingeschränkt Kenntnis von der Identität des Absenders. Dies ist notwendig, um die MMs entsprechend vergebühren zu können.

Der MMS-Dienstleister kann im Falle von Absender-Anonymität die tatsächliche Adresse des Absenders in dem entsprechenden Informations-Element der betroffenen Abstract-Messages 5 und 8 entweder durch einen Alias-Namen ersetzen oder frei lassen. Alternativ ist auch denkbar, dass der MMS-Dienstleister das entsprechende Informationselement weglässt.

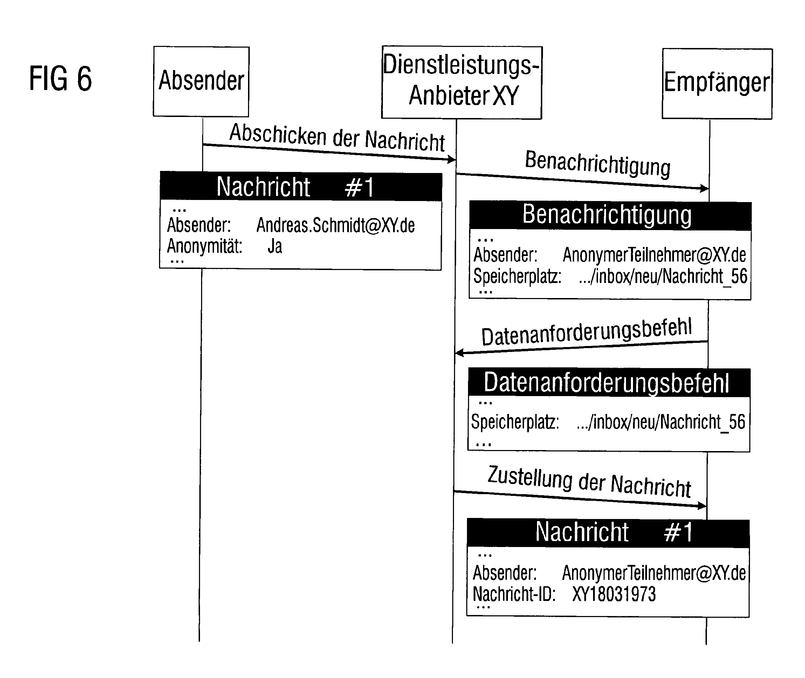

Figur 6 zeigt ein Ausführungsbeispiel eines Versendens einer Nachricht #1 von einem Absender an einen Empfänger. Der Absender schickt die Nachricht #1 an einen Dienstleistungsanbieter XY. Der Absender hat zwar Anonymität beantragt, jedoch ist die Adresse Andreas.Schmidt@XY.de dem Dienstleistungsanbieter XY bekannt. Anschließend benachrichtigt der Dienstleistungsanbieter XY den Empfänger, dass eine Nachricht von einem anonymen Teilnehmer bereitliegt. Mit Hilfe eines Datenanforderungsbefehls greift der Empfänger auf den Speicherplatz bei dem Dienstleistungsanbieter XY zu. Anschließend wird die Nachricht von dem Dienstleistungsanbieter XY mitanonymer Absenderkennung an den Empfänger gesendet.

Der Empfänger kann als Reaktion auf eine Benachrichtigung bzw. als Reaktion auf eine zugestellte MM seinen MMS-Dienstleistungsanbieter darüber informieren, dass er von dem Absender dieser MM zukünftig keine MMs mehr erhalten möchte, indem er eine entsprechende Anfrage A an seinen MMS-Dienstleistungsanbieter schickt. Dabei müssen zwei Fälle unterschieden werden:

### 1. Die Identität des Absenders ist nicht bekannt

Bleibt der Absender einer MM anonym, so kann in einer Ausführungsform die Anfrage A ein Identifikationssignal I beinhalten, aus dem der MMS-Dienstleistungsanbieter die Identität des Absenders ermitteln kann. Als Reaktion auf eine Benachrichtigung über eine neue zum Herunterladen bereitliegende MM kann als Identifikationssignal I der in der Benachrichtigung (Abstract Message 5 gemäß Fig. 5) enthaltene Speicherplatz der MM (URI) verwendet werden. Falls die Anfrage A des Empfängers eine Reaktion auf eine zugestellte MM (Abstract Message 8 gemäß Fig. 5) ist, so kann die Nachrichten-ID der MM als Identifikationssignal I genutzt werden.

Falls der MMS-Dienstleistungsanbieter die tatsächliche Adresse des Absenders durch einen temporären Alias-Namen ersetzt hat, ist auch die Verwendung dieses Alias-Namens als Identifikationssignals I denkbar. Da aber das Informationselement für die Absender-Adresse nach der technischen Spezifikation TS 23.140, Version 5.3.0 Release 5 des 3GPP nicht notwendigerweise übertragen zu werden braucht und der vom MMS-Dienstleistungsanbieter temporär vergebene Alias-Name später eventuell nicht eindeutig dem tatsächlichen Absender zugeordnet werden kann, werden bevorzugt URI bzw. Nachrichten-ID als Identifikationssignal I verwendet.

### 2. Die Identität des Absenders ist bekannt

Ist die Identität des Absenders bekannt, so kann als Identifikationssignal I alternativ zum URI (nach der Benachrichtigung) oder zur Nachrichten-ID (nach der Zustellung der MM) mit der Anfrage A auch die Adresse desjenigen Absenders an den MMS-Dienstleistungsanbieter übermittelt werden, der auf der/den Ausschlussliste(n) eingetragen werden soll. Auch hier gilt jedoch wiederum, da das Informationselement für die Absenderadresse nach der technischen Spezifikation TS 23.140 Version 5.3.0, Release 5 des 3GPP nicht notwendigerweise übertragen zu werden braucht, dass bevorzugt die URI bzw. Nachrichten-ID als Identifikationssignal I verwendet werden soll.

Die nachfolgende Tabelle zeigt, welche Identifikationssignale I in der Anfrage A verwendet werden können.

| **Anfrage A als Reaktion auf** | **Benachrichtigung** | | | **Zustellung** | | |
|---|---|---|---|---|---|---|
| **Absender ist dem Empfänger** | unbekannt | | bekannt | unbekannt | | bekannt |
| **Identifikationssignal I** | URI | Alias-Name | Absender-Adresse | Nachrichten-ID | Alias-Name | Absender-Adresse |

Nachfolgend werden weitere Ausführungsbeispiele der vorliegenden Erfindung erläutert. Hinsichtlich der Nachrichten wird jeweils auf den Ablauf gemäß Figur 5 Bezug genommen. Das Verschicken einer MM auf Seite des Absenders geschieht dabei, indem der Absender mit der Abstract Message 1 eine MM über die Schnittstelle MM1 an den MMS R/S A im MMS-Gebiet A seines MMS-Dienstleistungsanbieters verschickt, wobei er die Möglichkeit hat, seinen MMS-Dienstleistungsanbieter darüber zu informieren, ob bzw. dass er seine Identität vor dem Empfänger verbergen möchte. Der MMS R/S A bestätigt den korrekten Empfang der MM mit der Abstract Message 2. Die Übertragung der MM an den MMS R/S B im MMS-Gebiet B des Empfängers geschieht, falls erforderlich, mit dem Abstract Message-Paar 3 (enthält die MM) und 4 (enthält eine Rückmeldung).

Für das folgende Ausführungsbeispiel wird angenommen, dass die Identität des Absenders dem Empfänger mitgeteilt wird und die Anfrage A eine Reaktion auf die MM-Benachrichtigung ist. Nach Empfang der MM im Zuständigkeitsbereich MMSE B des MMS-Dienstleistungsanbieters SP B wird der Empfänger zunächst über die zum Herunterladen bereitliegende MM mit der Abstract Message 5 informiert. In dieser Benachrichtigung ist die Adresse des Absenders (optional), sowie die URI (Referenz auf dem Speicherplatz) der MM (obligatorisch) enthalten. Die Abstract Message 6 dient vorrangig als Bestätigung für den korrekten Empfang der Benachrichtigung durch den MMS UA B.

Der Empfänger erkennt anhand des Themas und/oder der Adresse des Absenders, dass es sich um eine für ihn uninteressante Werbebotschaft handelt, und schickt deshalb eine Anfrage A an seinen MMS-Dienstleistungsanbieter, um den Eintrag der Adresse des Absenders in eine sogenannte "schwarze Liste" zu veranlassen, wobei als Identifikationssignal I die Absender-Adresse aus der Benachrichtigung benutzt wird. Der MMS-Dienstleistungsanbieter SP kann diese Absender-Adresse direkt in die persönliche "schwarze Liste" des Empfängers eintragen. In Zukunft werden weitere MMs dieses Absenders vom empfängerseitigen MMS-Dienstleistungsanbieter gelöscht und dem Empfänger nicht mehr zum Herunterladen angeboten. Der Empfänger wird folglich nicht mehr von unerwünschten Nachrichten des Absenders belästigt.

In einem weiteren Ausführungsbeispiel wird angenommen, dass die Identität des Absenders dem Empfänger nicht mitgeteilt wird, das Informationselement für die Absender-Adresse fehlt und die Anfrage A eine Reaktion auf die MM-Benachrichtigung ist. Nach Empfang der MM im Zuständigkeitsbereich MMSE B des MMS-Dienstleisters B wird der Empfänger zunächst über die zum Herunterladen bereitliegende MM mit der Abstract Message 5 informiert. In dieser Benachrichtigung ist, basierend auf dem Wunsch des Absenders nach Anonymität, keine Absender-Adresse vorhanden. Allerdings sind ein Betreff (optional) und der URI (Referenz auf dem Speicherplatz der MM, obligatorisch) in der Benachrichtigung enthalten. Die Abstract Message 6 dient dabei vorrangig als Bestätigung für den korrekten Empfang der Benachrichtigung durch den MMS UA B.

Der Empfänger erkennt in diesem Ausführungsbeispiel anhand des Themas bzw. der Betreffzeile, dass es sich um eine für ihn uninteressante Werbebotschaft handelt und schickt deshalb eine Anfrage A an seinen MMS-Dienstleister, um den Eintrag der Adresse des Absenders in eine "schwarze Liste" zu veranlassen, wobei als Identifikationssignal I der URI der MM aus der Benachrichtigung benutzt wird. Der MMS-Dienstleistungsanbieter kann anhand der URI die Identität des Absenders ermitteln und ihn in die persönliche schwarze Liste des Empfängers eintragen. In Zukunft werden weitere MMs dieses Absenders vom empfängerseitigen MMS-Dienstleistungsanbieter gelöscht und dem Empfänger nicht mehr zum Herunterladen angeboten. Der Empfänger wird somit nicht mehr mit unerwünschten Nachrichten dieses Absenders belästigt.

In einem weiteren Ausführungsbeispiel wird angenommen, dass die Identität des Absenders dem Empfänger nicht mitgeteilt wird, die Absender-Adresse einen Alias-Namen enthält und die Anfrage A eine Reaktion auf die Zustellung der MM ist. Nach Empfang der MM im Zuständigkeitsbereich MMSE B des MMS-Dienstleistungsanbieters B wird der Empfänger zunächst über die zum Herunterladen bereitliegende MM mit der Abstract Message 5 informiert. In diesem Ausführungsbeispiel ist neben dem URI (Referenz auf dem Speicherplatz) auch ein Alias-Name (z.B. "Anonymer.Teilnehmer@XY.de") als Absender-Adresse in der Benachrichtigung enthalten. Die Abstract Message 6 dient vorrangig als Bestätigung für den korrekten Empfang der Benachrichtigung durch den MMS UA B.

Auf Basis der in der Benachrichtigung enthaltenen Informationen entscheidet sich der Empfänger für das Herunterladen der MM. Um das Herunterladen der MM zu initiieren, wird vom MMS UA B die Abstract Message 7 an den MMS R/S B geschickt. Das Zustellen der MM vom MMS R/S B an dem MMS UA B erfolgt mittels der Abstract Message 8. Neben der MM (also den multimedialen Nutz-Daten) werden auch ein Alias-Name (z.B. "Anonymer.Teilnehmer@XY.de") als Absender-Adresse und eine Nachrichten-ID für die MM mit der Abstract Message 8 übertragen. Der MMS R/S B kann mit der Abstract Message 9 vom MMS UA B über den erfolgreichen Ausgang des Herunterladens informiert werden. Falls der Empfänger feststellt, dass seine Entscheidung, die MM herunterzuladen falsch war, weil sie anstatt eines brauchbaren Inhalts nur Beleidigungen enthält, so kann er nun eine Anfrage A an seinen MMS-Dienstleistungsanbieter richten, um den Eintrag der Absender-Adresse in eine schwarze Liste zu veranlassen, wobei als Identifikationssignal I die (obligatorische) Nachrichten-ID der MM aus der Abstract Message 8 benutzt wird. Der MMS-Dienstleistungsanbieter SP B kann anhand der Nachrichten-ID die Identität des Absenders ermitteln und ihn in die persönliche schwarze Liste des Empfängers eintragen. In Zukunft werden weitere MMs dieses Absenders vom empfängerseitigen MMS-Dienstleistungsanbieters gelöscht und dem Empfänger nicht mehr zum Herunterladen angeboten. Der Empfänger wird nicht mehr von unerwünschten Nachrichten des Absenders belästigt und keine unnötigen Daten werden über die Luftschnittstelle zum Empfänger B übertragen.

Für das Abschicken der Anfrage A vom MMS UA B des Empfängers an den MMS R/S B des MMS-Dienstleistungsanbieters SP B bieten sich verschiedene Möglichkeiten an, die nachfolgend beschrieben werden.

Die Anfrage A kann als eigenständige Abstract Message verschickt werden, die (neben anderen Informationen) auch das Identifikationssignal I als eigenständiges Informationselement enthält. Andere Informationen könnten beispielsweise weitere Filterkriterien, die Angabe der entsprechenden Liste (z.B. privat oder öffentlich) oder zeitliche Beschränkungen für die gewünschte Filter-Funktionalität sein.

Des Weiteren kann die Anfrage A auch als eigenständiges Informationselement in einer bereits bekannten vom 3^{rd} Generation Partnership Project (3GPP) definierten Abstract Message, beispielsweise in den in Abbildung 5 gezeigten sogenannten "MM1 notification.RES" (Ref. 6), "MM1 retrieve.REQ" (Ref. 7), "MM1_acknowledgement.REQ" (Ref. 9) oder auch in der in Abbildung 5 nicht gezeigten Abstract Message "MM1_read_reply_recipient.REQ" (dient zur Übermittelung einer Lesebestätigung des Empfängers) übermittelt werden.

Schließlich kann die Anfrage A auch als Nutzdaten innerhalb einer MM verschickt werden, die idealerweise an eine Dienstleistungs-Adresse des MMS-Dienstleistungsanbieters für das Aktualisieren von schwarzen Listen adressiert wird.

Bevorzugt sollte(n) die schwarze(n) Liste(n) im Zuständigkeitsbereich MMSE des MMS-Dienstleistungsanbieters SP verwaltet werden, damit die Filter-Funktionalität bereits vor der Übertragung weiterer MMs vom gleichen Absender über die kostbare Luftschnittstelle greift. Dabei kann bevorzugt die schwarze Liste als Bestandteil der MMS-Benutzerdatenbank über die Schnittstelle MM6 in das MMSE des MMS-Dienstleistungsanbieters SP eingebunden werden (vgl. Figur 4). Alternativ kann sie aber auch auf einem gesonderten Rechner oder direkt vom MMS R/S verwaltet werden.

## Patentansprüche

1. Verfah zum Blockieren von unerwünschten Nachrichten (MMs), aufweisend die Verfahrensschritte:
- Übertragen einer Nachricht von einem Absender (MMS UA A) an einen Sender (MMS R/S A),
- Übertragen der Nachricht von dem Sender (MMS R/S A) an einen Dienstleistungsanbieter (MMSE SP B), und
- Übertragen der Nachricht von dem Dienstleistungsanbieter (MMSE SP B) an einen Empfänger (MMS UA B), wobei der Empfänger von dem Dienstleistungsanbieter bedient wird,
**dadurch gekennzeichnet, dass** die Übertragung der Nachricht von dem Dienstleistungsanbieter an den Empfänger nur dann erfolgt, falls der Absender nicht in einer Ausschlussliste steht.

2. Verfahren nach Anspruch 1,
**dadurch gekennzeichnet, dass**
das die Ausschlussliste beim Dienstleistungsanbieter verwaltet wird.

3. Verfahren nach einem der vorhergehenden Ansprüche,
**dadurch gekennzeichnet, dass**
die Ausschlussliste eine persönliche, individuelle Ausschlussliste des Empfängers ist.

4. Verfahren nach einem der Ansprüche 2 oder 3,
**dadurch gekennzeichnet, dass**
die Ausschlussliste eine allgemeine Ausschlussliste ist, welche für alle Empfänger und/oder Gruppen von Empfängern berücksichtigt wird.

5. Verfahren nach einem der vorhergehenden Ansprüche,
**dadurch gekennzeichnet, dass**
der Empfänger dem Dienstleistungsanbieter mitteilt, wenn er einen Absender auf die Ausschlussliste setzen lassen will.

6. Verfahren nach einem der vorhergehenden Ansprüche,
**dadurch gekennzeichnet, dass**
der Empfänger die Nachricht anonym empfängt und er dem Dienstleistungsanbieter mitteilt, wenn er den Absender der Nachricht auf die Ausschlussliste setzen lassen will.

7. Verfahren nach einem der vorhergehenden Ansprüche,
**dadurch gekennzeichnet, dass**
der Empfänger die Nachricht mit einem Alias-Namen empfängt und er dem Dienstleistungsanbieter mitteilt, wenn er den Absender der Nachricht auf die Ausschlussliste setzen lassen will.

8. Verfahren nach einem der Ansprüche 5 bis 7,
**dadurch gekennzeichnet, dass**
die Mitteilung an den Dienstleistungsanbieter als eigenständige Abstract Message ausgebildet ist.

9. Verfahren nach Anspruch 8,
**dadurch gekennzeichnet, dass**
die Mitteilung an den Dienstleistungsanbieter in Form eines Informationselementes in der Abstract Message integriert ist.

10. Verfahren nach einem der Ansprüche 5 bis 9,
**dadurch gekennzeichnet, dass**
die Mitteilung an den Dienstleistungsanbieter in einer Multimedia Message (MM), insbesondere in deren Nutzdaten, enthalten ist.

11. Verfahren nach einem der Ansprüche 5 bis 10,
**dadurch gekennzeichnet, dass**
die Mitteilung an den Dienstleistungsanbieter ein Identifikationssignal (I) beinhaltet, aus dem der Dienstleistungsanbieter die Identität des Absenders bestimmen kann.

12. Verfahren nach einem der Ansprüche 5 bis 11,
**dadurch gekennzeichnet, dass**
die Mitteilung an den Dienstleistungsanbieter weitere Informationen für die Filter-Funktionalität, insbesondere Art der Ausschlussliste und/oder zeitliche Beschränkungen, enthält.

13. Verfahren nach Anspruch 11,
**dadurch gekennzeichnet, dass**
eine Nachrichten-Kennung und/oder der Alias-Name als Identifikationssignal (I) verwendet werden.

14. System zum Blockieren von unerwünschten Nachrichten(MM), aufweisend:
- einen Sender (MMS R/S A), welcher geeignet ist, eine Nachricht von einem Absender (MMS UA A)zu übertragen,
- einen Dienstleistungsanbieter (MMSE SP B), welcher geeignet ist, die Nachricht von dem Sender (MMS R/S A) zu empfangen, und
- einen von dem Dienstleistungsanbieter (MMSE SP B) bedienten Empfänger (MMS UA B), wobei der Empfänger geeignet ist, die Nachricht von dem Dienstleistungsanbieter (MMSE SP B) zu empfangen,
**dadurch gekennzeichnet, dass**
der Dienstleistungsanbieter geeignet ist, die Nachricht an den Empfänger nur dann zu übertragen, falls der Absender nicht in einer Ausschlussliste steht.

15. System nach Anspruch 14,
**dadurch gekennzeichnet, dass**
das der Dienstleistungsanbieter geeignet ist, die Ausschlussliste zu verwalten.

16. System nach einem der Ansprüche 14 oder 15,
**dadurch gekennzeichnet, dass**
die Ausschlussliste eine persönliche, individuelle Ausschlussliste des Empfängers ist.

17. System nach einem der Ansprüche 14 oder 15,
**dadurch gekennzeichnet, dass**
die Ausschlussliste eine allgemeine Ausschlussliste ist, welche für alle Empfänger und/oder Gruppen von Empfängern berücksichtigt wird.

18. System nach einem der Ansprüche 14 bis 17,
**dadurch gekennzeichnet, dass**
der Empfänger dem Dienstleistungsanbieter mitteilt, wenn er einen Absender auf die Ausschlussliste setzen lassen will.

19. System nach einem der Ansprüche 14 bis 18,
**dadurch gekennzeichnet, dass**
der Empfänger die Nachricht anonym empfängt und er dem Dienstleistungsanbieter mitteilt, wenn er den Absender der Nachricht auf die Ausschlussliste setzen lassen will.

20. System nach einem der Ansprüche 14 bis 19,
**dadurch gekennzeichnet, dass**
der Empfänger die Nachricht mit einem Alias-Namen empfängt und er dem Dienstleistungsanbieter mitteilt, wenn er den Absender der Nachricht auf die Ausschlussliste setzen lassen will.

21. System nach einem der Ansprüche 18 bis 20,
**dadurch gekennzeichnet, dass**
die Mitteilung an den Dienstleistungsanbieter als eigenständige Abstract Message ausgebildet ist.

22. System nach Anspruch 21,
**dadurch gekennzeichnet, dass**
die Mitteilung an den Dienstleistungsanbieter in Form eines Informationselementes in der Abstract Message integriert ist.

23. System nach einem der Ansprüche 18 bis 22,
**dadurch gekennzeichnet, dass**
die Mitteilung an den Dienstleistungsanbieter in einer Multimedia Message (MM), insbesondere in deren Nutzdaten, enthalten ist.

24. System nach einem der Ansprüche 18 bis 23,
**dadurch gekennzeichnet, dass**
die Mitteilung an den Dienstleistungsanbieter ein Identifikationssignal (I) beinhaltet, aus dem der Dienstleistungsanbieter die Identität des Absenders bestimmen kann.

25. System nach einem der Ansprüche 18 bis 24,
**dadurch gekennzeichnet, dass**
die Mitteilung an den Dienstleistungsanbieter weitere Informationen für die Filter-Funktionalität, insbesondere Art der Ausschlussliste und/oder zeitliche Beschränkungen, enthält.

26. System nach Anspruch 24,
**dadurch gekennzeichnet, dass**
eine Nachrichten-Kennung und/oder der Alias-Name als Identifikationssignal (I) verwendet werden.

27. Endgerät, insbesondere Mobilfunk-Endgerät, zur Verwendung bei einem Verfahren nach einem der Ansprüche 1 bis 13 und/oder zur Verwendung in einem System nach einem der Ansprüche 14 bis 26.

28. Sende-/Empfangsvorrichtung, insbesondere Mobilfunk-Basisstation, zur Verwendung bei einem Verfahren nach einem der Ansprüche 1 bis 13 und/oder zur Verwendung in einem System nach einem der Ansprüche 14 bis 26.
